# EUROPEAN PATENT APPLICATION

(11) **EP 2 345 825 A1**
(43) Date of publication of application: **20.07.2011**
(21) Application number: 11150316.5
(22) Date of filing: 06.01.2011
(51) Int. Cl.: F16D 25/08, F16D 48/02, F16D 48/06

(54) **Apparatus and method for controlling operation of a vehicle clutch**

(30) Priority: 19.01.2010 GB 1000792
(71) Applicant: Nissan Motor Manufacturing (UK) Ltd., Cranfield Bedfordshire MK43 0DB (GB)
(72) Inventor: Alonso, Marcos, 08040 Barcelona (ES); Villatoro, Fernando, 08040 Barcelona (ES)

(57) **Abstract**

Apparatus for controlling operation of a vehicle clutch (5) includes a hydraulic clutch actuation system (7) comprising an input actuator (9), an output actuator (11), a conduit (13) for transferring hydraulic fluid between the input and output actuators (9,11) and a valve device (23) for regulating the flow rate of hydraulic fluid between the output and input actuators (9,11). Control means (25) controls the operational status of the valve device (23) according to input values relating to at least one vehicle operating parameter, the apparatus being configured to adjust the valve (23) to control the maximum flow rate of hydraulic fluid between the output and input actuators (9,11) when engaging the clutch (5). Advantages comprise reduced peak torque applied to the clutch; and a smoother ride for vehicle occupants. Smaller components may be used as there is less risk of abuse.

## Description

The present invention relates to apparatus and to a method for controlling operation of a vehicle clutch.

In vehicles such as cars, vans and lorries it is necessary to design drivetrain components with a substantial safety margin to account for the maximum load that can be applied to the components during use, even though such loads only occur very infrequently. This is to ensure that vehicles can endure worst-case shock loading of the drivetrain without failure. For example, in vehicles having manual transmission systems, very high loads can be generated during aggressive acceleration from a standing start if the clutch pedal is released suddenly. Accordingly some drivetrain components are over-sized in order to survive the maximum loading without breaking. The "over design" of drivetrain components leads to larger components, increased cost and increased weight. Increased weight leads to a reduction in performance, greater fuel consumption and hence greater emissions of exhaust gases, such as CO₂, NOₓ, etc.

The increased size and weight of the components also means that the drivetrain has a higher inertia than is necessary. This has an effect on the ride comfort experienced when engaging the clutch since higher inertia increases the jerkiness felt by the occupants of the vehicle. This is unpleasant for the occupants of the vehicle and is clearly undesirable.

US6,343,541 discloses a clutch system that includes a cylinder having a passive mechanical damping device comprising a disc and first and second spring washers. The main purpose of the damping device is to act as a vibration filter when the clutch system is in one of two rest positions, i.e. when the clutch is engaged or disengaged. The damping device additionally has the effect of limiting the flow of fluid from the interior of the cylinder to a hydraulic line. This throttling of the flow of fluid limits the maximum speed at which the clutch can engage. Therefore, in the situation wherein the user releases the clutch pedal suddenly, the damping device protects the clutch and reduces the unpleasant engagement jerk when the vehicle is started or during travel.

The damping system can also include a bimetallic support which enables the response of the damping device to vary with the temperature of the hydraulic fluid. However the system described offers no, or very limited control, and therefore is not optimised for all driving conditions. Also, because the valve is not controlled, it cannot be switched off and therefore continually regulates the flow of fluid. Thus it is always necessary for the fluid to overcome the force of the spring washers in the damping device. This reduces the responsiveness of the clutch system under some operating conditions.

Accordingly the present invention seeks to mitigate at least one of the aforementioned problems.

According to one aspect of the invention there is provided apparatus for controlling operation of a vehicle clutch, said apparatus including a hydraulic actuation system for actuating the clutch, the actuation system having an input actuator, an output actuator, a conduit for transferring hydraulic fluid between the input and output actuators and a valve device for regulating the flow rate of hydraulic fluid between the output and input actuators, and control means for controlling the operational status of the valve device according to input values relating to at least one vehicle operating parameter, wherein the control means is configured to adjust the valve to control the maximum flow rate of hydraulic fluid between the output and input actuators when engaging the clutch.

The peak torque generated in the drivetrain when engaging the clutch is determined, in part, by the rate of engagement of the clutch, which is determined by the rate at which the clutch is operated via the hydraulic actuation system. The peak torque is also determined, among other things, by the characteristics of the clutch (e.g. geometry, type of clutch, materials used, etc), the inertia of the drivetrain components, the speed of the vehicle, the engine rpm, the gear selected, and the engine torque at the time of the engagement. Another factor that can affect the peak torque loading of the drivetrain components such as the clutch and the transmission will be the difference in rotational speed between the engine and the drivetrain at the moment the clutch is engaged. Severe loading of the drivetrain can occur when the clutch is engaged when the vehicle is stationary and the engine speed is high. Similarly, if the vehicle speed is high and the user inadvertently selects a low gear and engages the clutch, the resulting torque applied to the drivetrain is caused by the road wheels of the vehicle momentarily driving the engine via the drivetrain. The invention enables the rate of engagement of the clutch to be controlled such that it does not exceed a maximum value. Controlling the rate of engagement prevents the peak value of torque experienced when the clutch is engaged from exceeding an acceptable limit and reduces the jerkiness experienced by the vehicle occupants, and thus improves the ride comfort. Since the drivetrain is protected from excessive peak torque values, smaller and lighter components can be used in the drivetrain, which reduces the weight of the vehicle and thus improves the vehicle's performance, and reduces fuel consumption, exhaust gas emissions, etc.

Advantageously the apparatus can include means for sensing at least one vehicle operating parameter selected from: engine speed, vehicle speed, operational status of a clutch actuator member, and gear selected; the control means being configured to control operation of the valve device according to the values of the sensed parameters. Sensing the vehicle operating parameters can either be achieved directly by measuring values for that parameter or indirectly, for example by calculating values from measurements made of at least one other parameter based on a known relationship.

Advantageously the control means can be arranged to limit the maximum flow rate of hydraulic fluid between the output and input actuators in response to the control means determining that the vehicle operating parameter is outside of an operating range. At other times, that is when the vehicle operating parameter is within the operating range, the control system can be arranged to set the valve to the fully open position thereby enabling the hydraulic actuation system to operate substantially as a conventional system, for example when the engine torque is relatively low, when changing between higher gears, such as between fourth and fifth gears and / or when the rate of change of position of the clutch actuator member is low. Thus the control means can be arranged to intervene in the operation of the hydraulic actuation system when abusive driving is detected and not to intervene when non-abusive driving is detected. This helps to ensure that when the vehicle is operating within acceptable limits the hydraulic actuation system operates efficiently.

Advantageously the control means is arranged to adjust the valve in response to the sensed values thereby limiting the rate of engagement of the clutch. For example, the control means can be arranged to close the valve, partially or fully, to manage the rate of engagement of the clutch in response to detecting high values of engine speed and / or a high rate of change of position of the clutch actuator member. Advantageously the control means can be arranged to adjust the valve to limit the flow rate in response to the control means determining that the vehicle operating parameter exceeds a threshold value, for example if the control means determines that the rate of change of position of the clutch actuator member exceeds a threshold value.

Advantageously the control means can be an electronic control means, for example comprising the engine control unit. Alternatively, the control means can be separate from the engine control unit, for example it can be a dedicated valve control means that is arranged to receive signals relating to vehicle operating parameters from the vehicle controller-area network (CAN-bus). The advantage of having an active electronic control means is that it enables the valve device to be set appropriately to control actuation of the clutch according to the real-time vehicle operating conditions.

In a preferred embodiment, the clutch includes a clutch input member, such as an engine flywheel, connected to a drive source and a clutch output member, such as a friction disc, connected to a transmission.

The apparatus further includes a clutch actuator member, such as a clutch pedal, that is operably connected with the input actuator, the arrangement being such that actuation of the clutch actuator member selectively engages and disengages the clutch. The clutch output member is operably connected with the output actuator. Preferably the output actuator comprises an output piston and the input actuator comprises an input piston. The clutch can include a bearing device operably connected with the output piston, for example via a lever, and resilient means such as a diaphragm spring, wherein the bearing device is arranged to selectively load the resilient means in accordance with inputs received from the clutch pedal, and the resilient means is arranged to move the clutch output member into and out of engagement with the clutch input member, thereby selectively engaging and disengaging the clutch.

To disengage the clutch, the vehicle driver actuates the clutch input member, for example by pressing downwards on the clutch pedal, which causes the clutch pedal to be displaced. This causes the input piston to move into its piston chamber thereby displacing hydraulic fluid from the piston chamber into the conduit and fluid from the conduit into the piston chamber of the output piston. This causes the bearing device to act on the resilient means, which causes the clutch output member to move translationally out of engagement with the clutch input member.

To engage the clutch the driver actuates the clutch actuator member, for example by removing his/her foot from the clutch pedal and the resilient means biases the clutch output member into engagement with the clutch input member. The control means controls the translational speed of the clutch output member, and hence the clutch engagement speed, by controlling the flow rate of hydraulic fluid between the output and input pistons. The clutch pedal moves to its start position under the return action of the resilient means via the hydraulic actuation system. The control means controls the return rate of the clutch actuator member by controlling the rate at which hydraulic fluid travels within the conduit.

According to another aspect of the invention there is provided a method for controlling operation of a vehicle clutch, said method including providing a hydraulic actuation system having an input actuator, an output actuator, a conduit for transferring hydraulic fluid between the input and output actuators, a valve device for regulating the flow rate of hydraulic fluid between the output and input actuators, and control means for controlling operation of the valve device; sensing at least one vehicle operating parameter; and controlling the valve to adjust the maximum flow rate of hydraulic fluid between the output and input actuators when engaging the clutch.

Advantageously the method can include sensing at least one vehicle operating parameter selected from: engine speed, vehicle speed, operational status of a clutch actuator member, and gear selected; and controlling operation of the valve device according to the values of the sensed parameters. The method limits the rate of engagement of the clutch in response to the sensed values.

The method can include adjusting the valve to limit the flow rate of hydraulic fluid between the output and input actuators in response to the control means determining that the vehicle operating parameter is outside of an operating range. For example, the method can include limiting the flow rate in response to detecting high values of engine speed and /or high rate of change of position of the clutch actuator member.

Advantageously the method can include comparing the sensed values of the at least one vehicle operating parameter with values stored in a memory device and determining from that comparison if the sensed values are inside or outside of an acceptable operating range.

According to another aspect of the invention there is provided a drivetrain for a vehicle having an apparatus according to any configuration described herein. According to another aspect of the invention there is provided a drivetrain adapted to use any method described herein. The drive train and/or vehicle can include a manual transmission system.

According to another aspect of the invention there is provided a vehicle having an apparatus according to any configuration described herein. According to another aspect of the invention there is provided a vehicle adapted to use any method described herein.

An embodiment of the invention will now be described, by way of example only, with reference to the accompanying drawings, in which:
Figure 1 is a diagrammatic representation of an apparatus for actuating a vehicle clutch in accordance with the invention; and
Figure 2 is a graph of clutch pedal displacement (in millimetres) against time (in seconds) to show an effect of the invention.

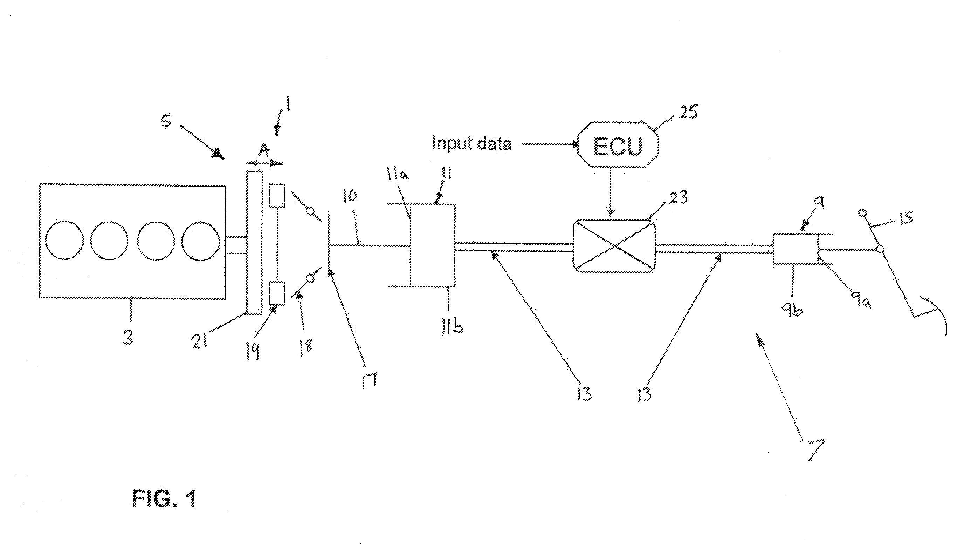

Figure 1 shows part of a drivetrain 1, which includes an engine 3, a clutch 5, and a hydraulic operating system 7 for operating the clutch 5. Other parts of the drivetrain 1 such as the transmission system, have been omitted for clarity.

The hydraulic operating system 7 includes a master cylinder 9, an operating cylinder 11, a hydraulic pipe 13 for connecting the master cylinder 9 to the operating cylinder 11, a clutch pedal 15 for actuating the master cylinder 9, and an operating bearing 17 that is operatively connected with the operating cylinder 11 via a lever 10. The operating bearing 17 is arranged to move a clutch output plate, friction disc 19, into and out of engagement with a clutch input plate mounted on a flywheel 21, according to the operating position of the clutch pedal 15.

To disengage the clutch 5, the clutch pedal 15 is moved from a start (engaged) position to a displaced (disengaged) position. Depressing the clutch pedal 15 has the effect of moving a master cylinder piston 9a within its piston chamber 9b such that it pushes hydraulic fluid from the chamber 9b through the hydraulic pipe 13 into the piston chamber 11 b of the operating cylinder 11. This causes the operating cylinder piston 11 a to be pushed along the chamber 11 b and the lever 10 to be actuated to move the bearing 17 to press on a diaphragm spring 18. The diaphragm spring 18 in turn acts on the friction disc 19, via a pressure plate moving it out of engagement with the flywheel 21. The clutch is then fully disengaged.

To engage the clutch 5, the driver reduces the force on the clutch pedal 15 and the diaphragm spring 18 biases the pedal 15 to move to the start position. The movement of the clutch pedal 15 has the effect of moving the master cylinder piston 9a such that it draws hydraulic fluid into the piston chamber 9b from the hydraulic pipe 13. This has the effect of drawing hydraulic fluid from the operating cylinder chamber 11 b into the hydraulic pipe 13, which pulls the piston 11a into its chamber 11 b. This in turn causes the bearing 17 to unload the diaphragm spring 18 thereby moving the friction disc 19 translationally in the axial direction into engagement with the flywheel 21 to fully engage the clutch. The arrow referenced 'A' in Figure 1 indicates the axial direction.

It will be appreciated by one skilled in the art, that the pedal 15 may also be provided with a biasing means such as a spring (not shown). The biasing means on the pedal 15 is used to bias the position of the pedal and to tune the effort required by the user to operate the clutch.

The hydraulic operating system 7 includes a valve 23 for controlling the flow rate (volume per unit time) of hydraulic fluid within the hydraulic pipe 13 between the master cylinder 9 and the operating cylinder 11. The valve 23 provides a variable resistance to the flow of hydraulic fluid and, in use, has the effect of controlling the rate at which hydraulic fluid moves into and out of the operating cylinder 11. This controls the translational axial speed of the friction disc 19 and hence the rate of clutch engagement / disengagement. The control system does not directly affect the rotational speed of the clutch 5.

The operation of the valve 23 is controlled by an electronic control unit (ECU) 25. The ECU 25 receives input data from vehicle sensors/meters (not shown). In some instances, values for vehicle operating parameters can be calculated on the basis of inputs and known relationships rather than being measured directly. The input data may include, among other things, the engine speed, the clutch pedal position or speed, the selected gear, pressure and/or flow in the hydraulic operating system 7, vehicle speed, etc. The ECU 25 determines the rate at which hydraulic fluid is allowed to flow between the master cylinder 9 and operating cylinder 11 in order to control the rate of clutch engagement when engaging the clutch 5. This allows the system to control clutch engagement, for example when selecting an initial gear when the vehicle is stationary (typically first gear or reverse gear) and when changing gears when the vehicle is in motion. The ECU 25 is programmed to control the flow of hydraulic fluid in the hydraulic pipe 13 to control the axial engagement speed when the friction disc 19 engages the flywheel 21 when engaging the clutch 5. Thus by controlling operation of the valve 23, the ECU 25 is able to effectively damp the hydraulic operating system 7, thereby limiting the maximum engagement torque between the input and output plates 21,19 for any given engine speed.

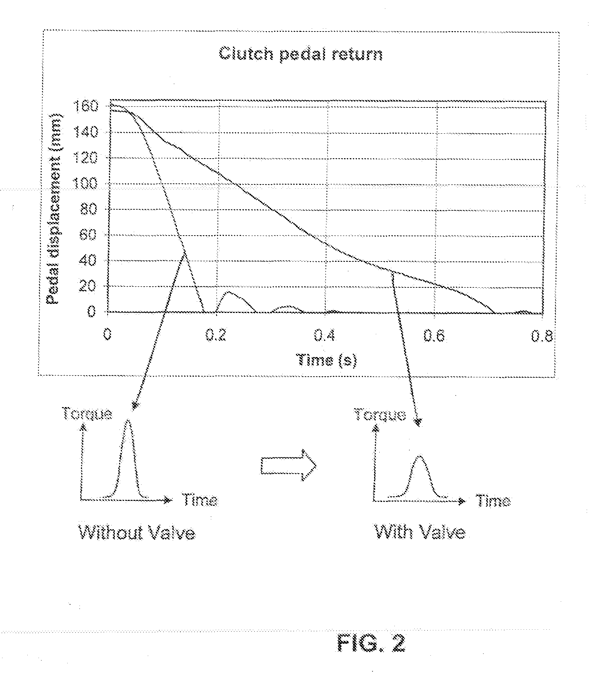

Of course, controlling the flow rate of hydraulic fluid within the hydraulic pipe 13 to affect the speed at which the operating bearing 17 moves, also has the effect of controlling the rate at which the clutch pedal 15 moves from its depressed position back to its start position, since the fluid exchange between the master and operating cylinders 9, 11 is along a single conduit. This is illustrated by the graph of clutch pedal displacement against time shown in Figure 2 for the hydraulic actuation system 7 having the control valve 23, and for comparison purposes, an equivalent hydraulic actuation system without the control valve 23. The graph showing the relationship between clutch pedal displacement and time for the actuation system 7 having the control valve 23 has a more gentle gradient than the graph for an actuation system not having the control valve 23. Thus the control valve 23 effectively increases the time it takes for the clutch plates 19,21 to fully engage. It is clear from the displacement graph that when there is no control valve 23, the return rate of the clutch pedal 15 to the start position is much faster.

Figure 2 also shows that by controlling the flow rate of hydraulic fluid in the hydraulic pipe 13, and hence the rate of engagement of the clutch 5, it is possible to reduce the peak value of torque generated when the clutch 5 is engaged. This is illustrated by a comparison of the torque against time graphs for the hydraulic actuation system 7 including the valve 23 and the equivalent system without the valve.

By limiting the engagement torque in this manner it is possible to have smaller and lighter drivetrain components than would be required without the control valve 23. This leads to a reduction in cost, weight and inertia of the components, which also leads to better performance, lower fuel consumption and lower emissions. It also significantly reduces the jerkiness experienced by the occupants of the vehicle and the effect of abusive driving on drivetrain components.

The ECU 25 can be programmed to intervene only when it detects or predicts when a potentially aggressive or abusive driving manoeuvre is to take place. At other times, the ECU 25 is programmed not to intervene. In this way, the ECU 25 controls the valve 23 to intervene only during clutch engagement and not disengagement, which could compromise clutch response and performance. The ECU 25 may predict when a potentially abusive event is about to occur based on a comparison between the rate of change of movement of the clutch pedal 15 or the rate of change of fluid flow or pressure within the hydraulic operating system 7; and the engine speed, gear selected, vehicle speed or other critical parameter. Use of prediction by the ECU 25 of a potentially abusive event affords the valve 23 more time to respond when required, improving system reliability and performance.

An abusive driving event may occur when the or each controlling operating parameter is outside of an acceptable operating range. Conversely, a non-abusive driving event occurs when the or each controlling operating parameter is within the acceptable operating range. For example, when not intervening, the valve 23 can be set to the fully open position to allow the maximum flow of hydraulic fluid within the pipe 13. In this condition the ECU 25 does not control the valve 23 to vary the flow rate of hydraulic fluid within the pipe 13. Operation of the clutch is fully controlled by the driver. When the ECU 25 detects that the value for at least one of the operating parameters is outside of its acceptable operating range, or predicts that an operating parameter is about to exceed a pre-determined range, the ECU 25 controls the valve 23 to reduce the flow rate of hydraulic fluid within the pipe 13. An example of when the ECU 25 may need to intervene is if the driver inadvertently releases the clutch pedal too quickly. In such an event, the rate of change of position of the clutch pedal exceeds a predetermined threshold value and would lead to excessive torque loading of the drivetrain and an undesirably jerky movement of the vehicle. To manage such an event, the ECU 25 intervenes to reduce the axial clutch engagement speed, thereby reducing the speed of clutch engagement, resulting in a more comfortable driving experience by mitigating the peak loading of the drivetrain. The ECU 25 can fully open the valve 23 again when it detects that the values for the or each controlling parameter have returned to their acceptable operating range.

When the ECU 25 is programmed to receive inputs relating to a plurality of parameters, the ECU 25 can be programmed such that intervention occurs only when a combination of factors occurs, for example when the engine speed is higher than a threshold value and a low gear is selected. The ECU 25 can be programmed with lookup tables relating to abusive and non-abusive driving conditions that provide a reference for the ECU 25 to compare values relating to individual parameters, or combinations of parameters, in order to determine whether or not it is necessary to operate the valve to limit the flow rate of hydraulic fluid within the pipe 13.

It will be apparent to the skilled person that modifications can be made to the above embodiment that fall within the scope of the invention. For example, the dedicated control system can be arranged to receive inputs from an Engine Control Unit or from a vehicle CAN-bus. It will be appreciated that the programming of the control means of the present invention may be adapted for any suitable combination of engine and transmission as may be required.

The embodiment described above includes substantially planar clutch plates 19,21. The invention is also applicable to other types of clutch such as cone clutches. The invention may be applied to automated manual transmissions, or to semi-automatic transmissions.

## Claims

1. Apparatus for controlling operation of a vehicle clutch (5), said apparatus including a hydraulic actuation system (7) for actuating the clutch (5), the actuation system having an input actuator (9), an output actuator (11), a conduit (13) for transferring hydraulic fluid between the input (9) and output (11) actuators and a valve device (23) for regulating the flow rate of hydraulic fluid between the output (11) and input (9) actuators, and control means (25) for controlling the operational status of the valve device (23) according to input values relating to at least one vehicle operating parameter, wherein the control means (25) is configured to adjust the valve device (23) to control the maximum flow rate of hydraulic fluid between the output (11) and input (9) actuators when engaging the clutch (5).

2. Apparatus according to claim 1, including means for sensing at least one vehicle operating parameter selected from: engine speed, vehicle speed, operational status of a clutch actuator member (15), and gear selected; the control means (25) being configured to control operation of the valve device (23) according to the values of the sensed parameters.

3. Apparatus according to any one of the preceding claims, wherein the control means (25) is arranged to adjust the valve (23) to limit the flow rate of hydraulic fluid between the output (11) and input (9) actuators in response to the control means (25) determining that the vehicle operating parameter is outside of an operating range.

4. Apparatus according to claim 3, wherein the control means (25) is arranged to reduce the flow rate in response to the control means (25) determining that the vehicle operating parameter exceeds a threshold value.

5. Apparatus according to any one of the preceding claims, wherein the control means (25) is an electronic control means.

6. Apparatus according to any one of the preceding claims, including a clutch actuator member (15) that is operably connected with the input actuator (9), the arrangement being such that actuation of the clutch actuator member (15) selectively engages and disengages the clutch (5).

7. Apparatus according to claim 6, wherein the control means (25) is arranged to control the return rate of the clutch actuator member (15) by controlling the rate at which hydraulic fluid is fed to the input actuator (9) from the conduit (13).

8. Apparatus according to any one of the preceding claims, wherein the clutch (5) includes a clutch output member (19) that is operably connected with the output actuator (11).

9. A method for controlling operation of a vehicle clutch (5), said method including providing a hydraulic actuation system (7) having an input actuator (9), an output actuator (11), a conduit (13) for transferring hydraulic fluid between the input (9) and output (11) actuators, a valve device (23) for regulating the flow rate of hydraulic fluid between the output (11) and input (9) actuators, and control means (25) for controlling operation of the valve device (23), sensing at least one vehicle operating parameter and controlling the valve (23) to adjust the maximum flow rate of hydraulic fluid between the output (11) and input (9) actuators when engaging the clutch (5).

10. A method according to claim 9, including sensing at least one vehicle operating parameter selected from: engine (3) speed, vehicle speed, operational status of a clutch actuator member (15), and gear selected; and controlling operation of the valve device (23) according to the values of the sensed parameters.

11. A method according to claim 10, including adjusting the valve (23) to limit the flow rate of hydraulic fluid between the output (11) and input (9) actuators in response to the control means (25) determining that the vehicle operating parameter is outside of an operating range.

12. A method according to claim 11, including limiting the flow rate in response to detecting high values of engine speed and /or high rate of change of position of the clutch actuator member (15).

13. A method according to any one of claims 8 to 12, including comparing the sensed values of the at least one vehicle operating parameter with values stored in a memory device and determining from that comparison if the sensed values are inside or outside of an acceptable operating range.

14. A drivetrain for a vehicle having an apparatus, or adapted to use a method, as claimed in any one of the preceding claims.

15. A vehicle having an apparatus, or adapted to use a method, as claimed in any one of the preceding claims.
